# FASCICULE DE BREVET EUROPEEN

(11) **EP 2 553 221 B1**
(45) Date de publication et mention de la délivrance du brevet: **18.05.2016**
(21) Numéro de dépôt: 11715721.4
(22) Date de dépôt: 23.03.2011
(51) Int. Cl.: F01D 11/00, F01D 25/18, F16J 15/32

(54) **Dispositif d'étanchéité pour une enceinte d'huile d'un turboréacteur**
Dichtungsvorrichtung für eine Ölkammer eines Düsentriebwerks
Sealing device for jet engine oil chamber

(30) Priorité: 26.03.2010 FR 1052237
(43) Date de publication de la demande: 06.02.2013
(73) Titulaire: SNECMA, 75015 Paris (FR)
(72) Inventeur: GAUTHIER, Gérard, Philippe, F-77430 Champagne sur Seine (FR); MORREALE, Serge, René, F-77390 Guignes (FR)
(74) Mandataire: Gevers & Orès
(86) Numéro de dépôt international: PCT/FR2011/050621
(87) Numéro de publication internationale: WO 2011/117542

(56) Documents cités:
- EP-A2- 1 215 422
- DE-A1-102009 025 941
- US-A1- 2004 256 807

## Description

L'invention concerne un turboréacteur et en particulier un dispositif d'étanchéité pour une enceinte d'huile de turboréacteur.

Un turbomoteur pour un aéronef comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par un arbre, formant ainsi, par exemple, un corps haute pression et un corps basse pression.

Le turboréacteur présente généralement, sensiblement au niveau de l'extrémité amont du corps haute pression, une "enceinte amont" contenant des organes de type roulements et engrenages. Il présente par ailleurs, sensiblement au niveau de l'extrémité aval du corps haute pression, une "enceinte aval" contenant des organes de type roulements et engrenages lubrifiés par de l'huile. L'huile, projetée par ces pièces en rotation, forme un brouillard (ou suspension) de gouttelettes en suspension dans les enceintes. Par ailleurs, un flux de gaz (qui est de l'air) les traverse, notamment à des fins de ventilation. Pour éviter que l'huile ne soit transportée par le flux de gaz hors des enceintes, les gaz sont évacués dans des "déshuileurs" généralement formés par des cheminées radiales ménagées dans l'arbre basse pression et sur la paroi desquelles l'huile est captée pour être réinjectée dans l'enceinte correspondante, par effet centrifuge. Les déshuileurs communiquent avec un tube de dégazage (également tournant) concentrique à l'arbre basse pression et dans l'enceinte duquel les gaz sont transportés depuis les déshuileurs vers la sortie du tube de dégazage où ils sont éjectés, généralement au niveau de la tuyère du turboréacteur.

Les enceintes amont et aval sont formées et délimitées par des parois de la structure fixe du turboréacteur mais aussi par des parois d'éléments tournants. Elles doivent permettre le passage d'un flux de gaz mais retenir au maximum l'huile en leur sein et c'est pourquoi l'étanchéité entre les éléments fixes et les éléments tournants d'une enceinte d'huile est une problématique particulièrement délicate.

Traditionnellement, l'étanchéité est réalisée à l'aide de joints de type labyrinthe c'est-à-dire formés par des léchettes solidaires d'une pièce tournante et d'un matériau abradable solidaire d'une pièce fixe sur lequel viennent frotter les léchettes. Ce frottement se fait avec un certain jeu pour autoriser le passage d'un flux de gaz en provenance des compresseurs basse pression ou haute pression ; ces gaz s'opposent à la sortie d'huile par le joint labyrinthe ; leur débit est dimensionné pour être suffisant au ralenti et est, par conséquent, excessif dans les autres phases de vol (dans lesquelles le débit d'air aspiré par la soufflante du turboréacteur est plus important). Ce flux excessif dans les autres phases de vol a au moins deux conséquences néfastes : tout d'abord, il réduit d'autant le rendement du moteur et, ensuite, il a tendance à entraîner une plus grande quantité d'huile hors de l'enceinte, au niveau des déshuileurs.

On a donc envisagé de remplacer les joints à labyrinthe par des joints de type "à brosse" c'est-à-dire comportant une pluralité de fibres sensiblement radiales juxtaposés, fixées à une pièce fixe et dont les extrémités libres sont en contact avec une pièce tournante (ou très proches d'elle), les fibres étant de préférence légèrement inclinées dans le sens de rotation de la pièce tournante ; les fibres du joint à brosse peuvent par exemple être en carbone. Un tel dispositif est notamment décrit dans la demande de brevet US 2004/0256807 de la société General Electric.

De tels joints à brosse présentent l'avantage de requérir un flux de gaz circulant au travers d'eux dont le débit n'est pas trop important pour garantir leur étanchéité à l'huile. Ils présentent en revanche l'inconvénient d'avoir tendance à être le siège d'une cokéfaction de l'huile avec laquelle ils sont en contact. La cokéfaction est la transformation de l'huile en un dépôt solide ; elle résulte de l'échauffement de l'huile collée aux fibres de carbone ; elle entraîne une diminution de l'efficacité du joint à brosse. Par ailleurs, les frottements des poils sur la piste de la pièce tournante destinée à être en contact avec leurs extrémités entraînent leur usure et donc également une diminution de leur efficacité dans le temps.

L'invention vise à pallier ces inconvénients et en particulier à proposer un dispositif d'étanchéité pour une enceinte d'huile de turboréacteur qui soit efficace et dont les caractéristiques soient pérennes dans le temps.

C'est ainsi que l'invention concerne un dispositif d'étanchéité selon la revendication 1.

Grâce à l'invention, un flux d'huile est créé le long des brins du joint à brosse, ce qui assure un renouvellement de l'huile à leur contact, puisque cette dernière est entraînée en mouvement le long des brins. L'huile résiduelle est ainsi entraînée par l'huile alimentée et n'a pas le temps de se dégrader ; les phénomènes de cokéfaction sont ainsi réduits ce qui évite que les brins ne soient collés les .uns aux autres, améliorant ainsi tant l'efficacité que la pérennité du joint. Par ailleurs, les brins sont lubrifiés et donc moins dégradés par leur contact tournant avec les organes du turboréacteur.

L'invention est particulièrement remarquable en ce qu'elle a consisté à résoudre un problème lié à la présence d'huile sur le joint en alimentant justement ce joint en huile ; ainsi, alors qu'on aurait pu penser que c'est en protégeant au maximum le joint de l'huile qu'on améliorerait son étanchéité à l'huile, on a amélioré l'étanchéité à l'huile du joint avec de l'huile.

On peut dimensionner les moyens d'acheminement de l'huile récupérée pour contrôler le flux d'huile circulant le long des brins du joint à brosse.

La circulation de l'huile peut par ailleurs être agencée pour réduire la température du joint à brosse et ainsi endiguer encore mieux les phénomènes de cokéfaction.

De préférence toujours, l'huile de lubrification se dégradant sous l'effet de la température (oxydation et cokéfaction), elle comporte au moins un additif agencé pour lutter contre la cokéfaction. Un tel additif est connu en soi mais il perd en efficacité avec le temps. Grâce à l'alimentation en huile prévue dans le cadre de l'invention, l'huile (et donc son additif) étant renouvelée, elle présente toujours de bonnes caractéristiques anti-cokéfaction.

Selon une forme de réalisation préférée, les moyens d'acheminement de l'huile récupérée comportent au moins un canal de guidage par gravité de l'huile depuis les moyens de récupération jusqu'au joint à brosse.

Selon une forme de réalisation dans ce cas, le joint comportant un tore au moins partiellement creux (c'est-à-dire présentant un volume intérieur) auquel sont fixés les brins, les moyens d'acheminement comportent au moins un canal de guidage de l'huile depuis les moyens de récupération vers l'intérieur du tore (c'est-à-dire dans son volume intérieur) pour imprégner les brins dans leur zone de fixation au tore. La lubrification des brins du joint est ainsi encore améliorée.

Selon une forme de réalisation, les moyens de récupération d'huile comportent, en position supérieure du turboréacteur, un réservoir de récupération par gravité d'huile circulant le long d'une paroi.

Selon une forme de réalisation, les moyens de récupération d'huile comportent au moins une nervure de rétention d'huile associée à une rainure de guidage de l'huile depuis la nervure vers le joint à brosse (la rainure formant dans ce cas le canal de guidage).

Selon une forme de réalisation préférée, les moyens d'acheminement de l'huile récupérée comportent une source d'huile spécifique au joint à brosse c'est-à-dire dédiée à son alimentation.

L'invention concerne encore un turboréacteur avec un dispositif d'étanchéité comportant les caractéristiques du dispositif d'étanchéité présenté ci-dessus.

L'invention sera mieux comprise à l'aide de la description suivante de la forme de réalisation préférée du turboréacteur de l'invention, en référence aux planches de dessins annexées, sur lesquelles:
- la figure 1 représente une vue globale en coupe axiale du turboréacteur de l'invention ;
- la figure 2 représente une vue en coupe axiale schématique de l'enceinte amont du turboréacteur de la figure 1, conformément à une première forme de réalisation de l'invention ;
- la figure 3 représente une vue partielle en coupe transversale de la partie supérieure de l'enceinte de la figure 2 ;
- la figure 4 représente une vue en coupe axiale schématique de l'enceinte amont du turboréacteur de la figure 1, conformément à une deuxième forme de réalisation de l'invention ;
- la figure 5 représente une vue en coupe axiale schématique de l'enceinte amont du turboréacteur de la figure 1, conformément à une troisième forme de réalisation de l'invention ;
- la figure 6 représente une vue partielle en coupe transversale de la partie supérieure de l'enceinte de la figure 5 et
- la figure 7 représente une vue en coupe axiale schématique de l'enceinte amont du turboréacteur de la figure 1, conformément à une quatrième forme de réalisation de l'invention.

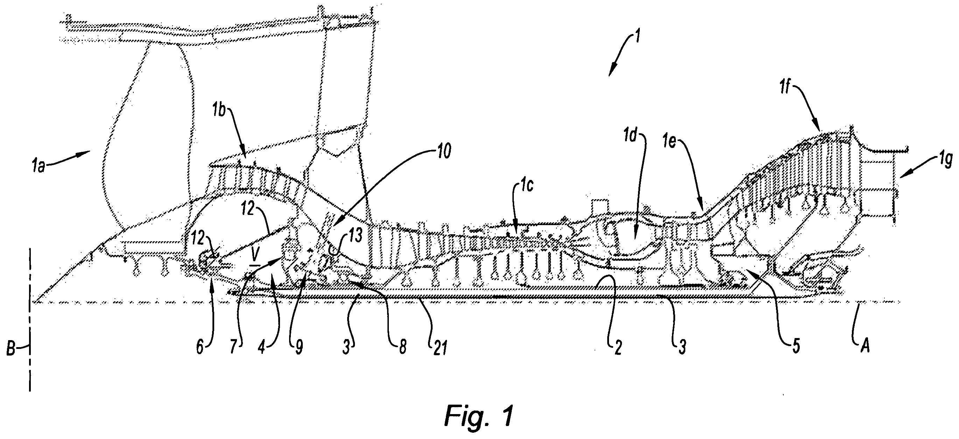

En référence à la figure 1, un turboréacteur 1 conforme à une première forme de réalisation de l'invention comporte, de manière classique, une soufflante 1a, un compresseur basse pression 1b, un compresseur haute pression 1c, une chambre de combustion 1d, une turbine haute pression 1e, une turbine basse pression 1f et une tuyère d'échappement 1g. Le compresseur haute pression 1c et la turbine haute pression 1e sont reliés par un arbre haute pression 2 et forment avec lui un corps haute pression. Le compresseur basse pression 1b et la turbine basse pression 1f sont reliés par un arbre basse pression 3 et forment avec lui un corps basse pression.

Le turboréacteur 1 comporte des organes statiques (ou fixes) et des organes tournants, formant les différents éléments fonctionnels ci-dessus, de manière connue.

Le turboréacteur 1 présente, sensiblement au niveau de l'extrémité amont du corps haute pression, une "enceinte amont" 4 contenant des organes de type roulements et engrenages et, sensiblement au niveau de l'extrémité aval du corps haute pression, une "enceinte aval" 5 contenant des organes de type roulements et engrenages. Ces enceintes 4, 5 sont classiquement désignées par l'homme du métier par l'expression d'enceintes d'huile 4, 5 dans la mesure où elles contiennent une suspension de gouttelettes d'huile, comme expliqué plus bas.

Le turboréacteur 1 s'étend globalement suivant un axe A qui est l'axe de rotation de ses organes tournants et en particulier l'axe des arbres basse pression 3 et haute pression 2. Dans la suite de la description, les notions de longitudinal, radial, interne ou externe sont relatives à cet axe A.

L'invention va être décrite, dans ses différentes formes de réalisation, en relation avec l'enceinte amont 4, mais il va de soi qu'elle s'applique également à l'enceinte aval 5 et plus généralement à toute autre enceinte contenant ou logeant des organes avec une suspension d'huile pour leur lubrification.

L'enceinte amont 4 définit un volume dans lequel sont logés les organes de type roulements et engrenages. En l'espèce, sont logés dans l'enceinte amont 4 un premier palier 6, un deuxième palier 7 et un troisième palier 8, ces paliers 6, 7, 8 comportant chacun une bague interne 6a, solidaire du l'arbre basse pression 3, une bague externe 6b, solidaire de la structure fixe du turboréacteur et des moyens de roulement 6c tels que des billes ou rouleaux entre les bagues 6a, 6b pour permettre la rotation de la bague interne 6a par rapport à la bague externe 6b (seules les bagues 6a, 6b et moyens de roulement 6c du premier palier 6 ont été référencés sur les figures). L'enceinte amont 4 contient également en son sein l'extrémité interne 9 d'un arbre 10 de prise de mouvement sur l'arbre haute pression 2, cet arbre 10 étant connecté, à son extrémité externe, à un boîtier d'accessoires (non représenté) communément désigné par l'expression AGB par l'homme du métier (AGB étant l'acronyme anglais de "Accessory Gear Box"), de manière connue.

L'enceinte amont 4 définit un volume intérieur V délimité par des organes fixes et des organes tournants, plus précisément par des parois d'organes fixes et d'organes tournants. En l'espèce, l'enceinte amont 4 est notamment délimitée, du côté interne par la portion d'extrémité amont de l'arbre basse pression 3 et des pièces solidaires de cet arbre, du côté amont et externe par un carter 12 solidaire de la structure fixe du turboréacteur et supportant la bague externe 6b du premier palier 6 et du côté aval par un carter 13 délimitant en partie l'enveloppe interne de la veine de gaz (entre le compresseur basse pression 1b et le compresseur haute pression 1c).

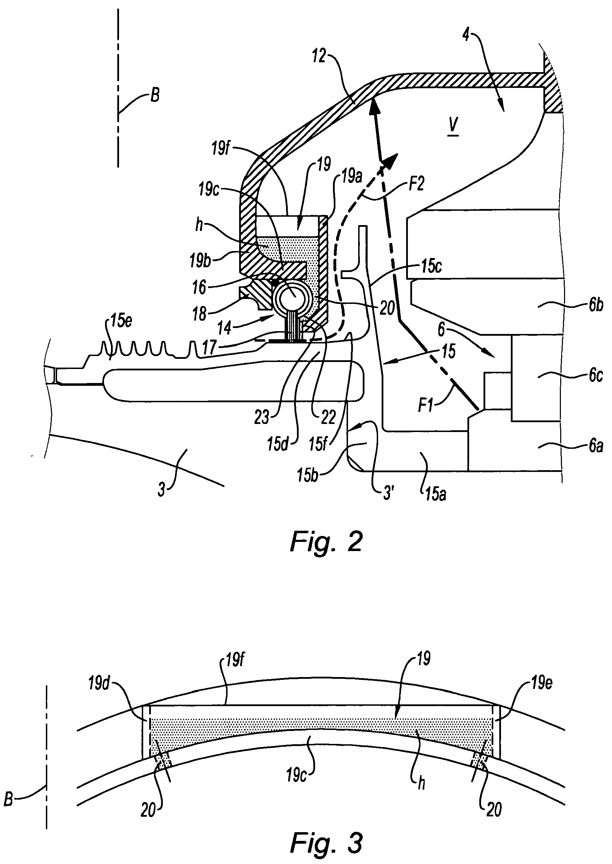

Les paliers contenus dans le volume intérieur V de l'enceinte 4 sont alimentés en huile de lubrification, de manière connue ; l'huile projetée par les pièces en rotation forme un brouillard (ou suspension) de gouttelettes en suspension dans l'enceinte 4. Cette alimentation en huile des paliers de l'enceinte 4 peut être obtenue de différentes manières. En l'espèce, la bague interne 6a du premier palier 6 est percée d'orifices (non représentés) de passage de l'huile vers l'intérieur du palier 6 puis, par centrifugation, vers le volume intérieur V de l'enceinte 4, comme représenté schématiquement par la flèche F1 sur la figure 2 ; l'huile est projetée dans l'enceinte 4 et plus précisément centrifugée puisque la bague interne 6a tourne. Conformément à une autre forme de réalisation non représentée, un ou plusieurs gicleurs d'alimentation d'huile peuvent être agencés à proximité des moyens de roulement 6c du premier palier 6, de manière connue.

L'enceinte amont 4 comporte par ailleurs, de son côté amont, un joint d'étanchéité 14, dont la fonction est d'assurer l'étanchéité à l'huile de l'enceinte 4, entre ses organes tournants et ses organes statiques, en l'espèce entre le carter 12 et l'arbre basse pression 3, plus précisément entre le carter 12 et une pièce intermédiaire 15 solidaire de l'arbre basse pression 3, présentée plus bas. Ce joint d'étanchéité 14 est un joint à brosse 14. Il comporte un tore annulaire 16, solidaire d'une paroi de la structure fixe du turboréacteur (en l'espèce solidaire du carter 12 de la structure fixe), sur lequel sont fixés des brins 17 ou poils 17, en l'espèce formés à base de carbone, agencés pour venir en contact avec une paroi d'un organe tournant du turboréacteur. Le tore 16 est rigide et par exemple formé dans un métal, en l'espèce de l'acier. Plus précisément en l'espèce, le carter 12 de la structure fixe présente, dans sa portion amont, une gorge dans laquelle est logé le tore 16, ce dernier étant bloqué en position par un écrou 18, de manière connue en soi.

L'enceinte 4 se situe, du côté amont, à proximité de l'extrémité amont de l'arbre basse pression 3. La bague interne 6a du premier palier 6 est fixée directement sur l'arbre basse pression 3. Ce dernier comporte, en amont de cette bague interne 6a et à distance d'elle, un épaulement radial 3' formant un rebord vers le côté extérieur. Entre la bague interne 6a et l'épaulement radial 3' est fixée une pièce intermédiaire 15 remplissant une pluralité de fonctions. Cette pièce intermédiaire 15 est en l'espèce monobloc ; il s'agit globalement d'une pièce de révolution ; elle comporte une première portion longitudinale 15a, du côté aval, de forme annulaire, prolongée par une portion radiale 15b à partir de laquelle sont ménagées deux portions, à savoir un flasque radial 15c et une deuxième portion longitudinale annulaire 15d dont l'extrémité amont 15e est fixée à l'arbre basse pression 3. La première portion longitudinale aval 15a de la pièce intermédiaire 15 est fixée entre la bague interne 6a et l'épaulement 3' de l'arbre basse pression et remplit une fonction de fixation de la pièce intermédiaire 15. Sa portion radiale 15b s'étend le long de la paroi radiale de l'épaulement 3' et au-delà de son côté extérieur. Son flasque radial 15c forme un écran pour l'huile alimentant l'enceinte 4 en provenance de la bague interne 6a du premier palier 6, pour éviter que celle-ci ne soit directement projetée sur le joint d'étanchéité 14 ; l'homme du métier parle classiquement, s'agissant d'un tel flasque 15c formant écran pour les gouttelettes d'huile, de "lance-goutte" ; il permet notamment en l'espèce de maîtriser l'alimentation en huile du joint 14. La deuxième portion longitudinale annulaire 15d présente une surface externe 15f qui forme une piste pour les brins 17 du joint à brosse 14, c'est-à-dire que cette surface 15f est agencée pour que les extrémités libres des brins 17 viennent en contact sur elle ; on note que la pièce intermédiaire 15 est solidaire de l'arbre basse pression 3 et donc entraînée en rotation avec elle tandis que le joint à brosse 14 est statique puisqu'il est solidaire du carter 12 de la structure fixe. Les brins 17 du joint 14 sont de préférence inclinés dans le plan transversal dans le sens de rotation de l'arbre basse pression 3, de manière connue en soi, pour accompagner la rotation de la piste 15f avec laquelle ils sont en contact.

Conformément à l'invention, le joint 14 est alimenté en huile de lubrification h pour générer, guider et entraîner un flux d'huile le long de ses brins 17, assurant ainsi une circulation d'huile le long des brins 17 et garantissant de la sorte l'efficacité du joint 14 et la pérennité de cette efficacité, comme expliqué plus haut dans l'introduction de la description.

Dans la première forme de réalisation représentée sur les figures 2 et 3, le turboréacteur 1 comporte un réservoir 19 de récupération par gravité d'huile h dans la suspension d'huile de l'enceinte 4. Ce réservoir 19 remplit donc une fonction de captation ou récupération d'une partie de l'huile en suspension dans le volume intérieur V de l'enceinte 4. Le turboréacteur 1 comporte par ailleurs des canaux 20 de transport et de guidage de l'huile depuis le réservoir 19 vers le joint à brosse 14 et plus précisément vers ses brins 17.

Le haut et le bas, ainsi que les notions de supérieur et inférieur, sont définis par rapport à la verticale, cette dernière étant définie, pour un turboréacteur, comme la direction verticale dans sa position de montage sur un avion à l'arrêt c'est-à-dire un avion posé sur un plan horizontal. Un axe vertical B a été tracé sur les figures. L'axe A du turboréacteur 1 est donc horizontal sur les figures.

Plus précisément, en référence à la figure 3, le réservoir 19 est disposé en position supérieure du turboréacteur 1. Il se présente sous la forme d'une enceinte fermée sur toutes ses faces hormis sur sa face supérieure. Plus précisément, il est formé par une paroi aval 19a qui fait face à une paroi amont 19b formée par une portion interne du carter 12 de la structure fixe, par une paroi inférieure (interne) 19c formée par un retour (vers l'aval) du carter 12 de la structure fixe et reliant les parois amont 19b et 19a, et par deux parois latérales 19d, 19e situées de part et d'autre. Sa face supérieure 19f est ouverte. La paroi aval 19a et les parois latérales 19d, 19e sont des parois planes verticales, la paroi inférieure 19c suit la forme annulaire du carter et la face supérieure ouverte 19f est horizontale.

L'huile est projetée contre la surface interne du carter 12 de la structure fixe, comme représenté de manière schématique par la flèche F1. Une partie de l'huile est en suspension dans l'enceinte 4 et sur les différents organes qu'elle contient ; une partie de l'huile ruisselle sur la surface interne du carter 12 de la structure fixe et s'écoule par gravité depuis le haut du turboréacteur 1 vers le bas ; en effet, le carter 12 est de forme conique, de diamètre décroissant de l'aval vers l'amont, et autorise donc un tel ruissellement. Une portion de cette huile s'écoule donc dans le réservoir 19 où elle est reçue, formant un bain d'huile h.

Les canaux 20 s'étendent radialement et débouchent d'une part dans le réservoir 19 et d'autre part à proximité du côté externe des brins 17 du joint à brosse 14, les canaux 20 contournant le tore 16 pour guider l'huile vers le côté externe des brins 17. En l'espèce, et plus précisément, le turboréacteur 1 comporte deux canaux 20 situés de part et d'autre du réservoir 19, comme on le voit sur la figure 3. L'huile h contenue dans le réservoir 19 s'écoule par gravité dans les canaux 20 et alimente une chambre annulaire 22 (sur 360°) ménagée entre la partie interne de la paroi aval 19a formant le réservoir 19 et la partie interne du tore 16 du joint à brosse 14 ; la chambre annulaire 22 est "noyée" d'huile c'est-à-dire que son volume est complètement rempli d'huile. Une pluralité de petits canaux 23, en l'espèce des lunules équidistantes, de transport d'huile depuis la chambre annulaire 22 vers les brins 17, sont percés et permettent la diffusion de l'huile le long des brins 17, par effets conjugués de gravité et de capillarité. Le débit d'huile h alimentant le joint à brosse 14 est régulé et défini par le volume du réservoir 19 et les dimensions de la chambre annulaire 22 et des canaux 20, 23. L'huile s'écoule le long des brins 17 du joint 14 jusqu'à la piste 15f avec laquelle ces brins 17 sont en contact.

Par ailleurs, le joint à brosse 14 est agencé pour laisser passer un flux de gaz (qui est de l'air) depuis l'extérieur vers l'intérieur V de l'enceinte 4, comme symbolisé par la flèche F2. Ce flux de gaz permet d'empêcher une fuite de l'huile hors de l'enceinte 4, de manière connue. En outre, ce flux de gaz forme un moyen d'évacuation de l'huile lorsqu'elle a atteint l'extrémité interne des brins 17 du joint 14 et la piste 15f, favorisant ainsi la circulation de l'huile le long des brins 17. Plus précisément, le flux de gaz est combiné au lance-goutte 15c pour l'évacuation de l'huile h : l'huile est transportée par le flux de gaz F2 jusqu'au lance-goutte 15c par lequel elle est entraînée par centrifugation dans l'enceinte 4 où elle se retrouve en suspension sous forme de gouttelettes. Le flux de gaz F2 circule dans l'enceinte 4 et s'échappe par des cheminées de déshuilage ou déshuileurs (non représentées mais connues en soi et déjà présentées en introduction de la description) pour ensuite être guidé dans un tube de dégazage 21 qui s'étend concentriquement à l'arbre basse pression 3, de manière connue en soi.

On note incidemment que dans l'hypothèse où l'avion viendrait à prendre une position dans laquelle le réservoir 19 ne serait plus orienté horizontalement, de l'huile pourrait s'échapper de ce dernier ; on peut par exemple songer, dans une application militaire, à un vol sur le dos d'un avion de chasse. Le cas échéant, cela n'aurait pas de conséquences problématiques dans la mesure où une telle situation ne se prolonge généralement pas longtemps, une interruption temporaire d'alimentation en huile du joint n'étant pas problématique.

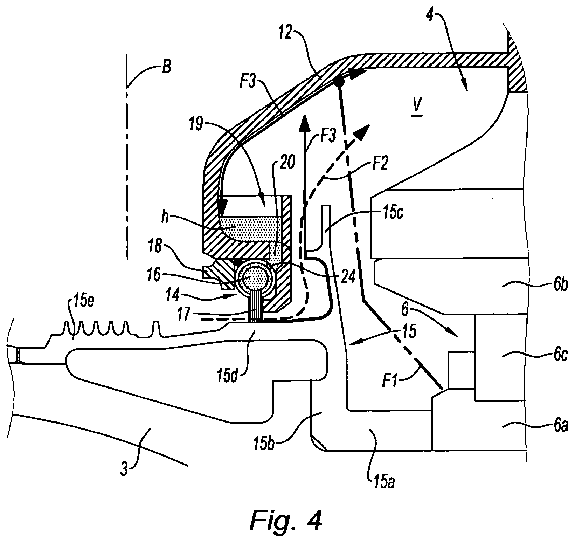

D'autres formes de réalisation du turboréacteur de l'invention vont maintenant être décrites. Ces formes de réalisation sont très similaires à la forme de réalisation précédente, seuls étant modifiés les éléments en lien avec l'alimentation en huile du joint à brosse 14. C'est pourquoi les références utilisées pour les éléments des turboréacteurs des figures 4 à 7 de structure ou fonction identique, équivalente, similaire ou comparable à celles des éléments du turboréacteur des figures 1 à 3 sont les mêmes, pour simplifier la description. D'ailleurs, l'ensemble de la description du turboréacteur des figures 1 à 3 n'est pas reprise, cette description s'appliquant aux turboréacteurs des figures 4 à 7 lorsqu'il n'y a pas d'incompatibilités. Seules les différences notables, structurelles et fonctionnelles, seront décrites.

Sur ces formes de réalisation, on a représenté par des flèches F3 une ou des trajectoires possibles pour des gouttelettes d'huile h.

Dans la forme de réalisation de la figure 4, le dispositif d'étanchéité comporte de nouveau un réservoir 19 de récupération (ou captation ou prélèvement) par gravité d'huile h dans la suspension d'huile de l'enceinte 4 et des canaux 20 de transport de l'huile depuis le réservoir 19 vers le joint à brosse 14. Des canaux 24 sont par ailleurs ménagés dans le tore 16 de maintien des brins 17, qui est creux; ils débouchent d'une part dans les canaux 20 de transport d'huile depuis le réservoir 19 et d'autre part dans un volume intérieur du tore 16 communiquant avec l'extrémité radiale externe des brins 17. Ainsi, les canaux 20, 24 sont agencés pour relier fluidiquement le réservoir d'huile 19 à l'extrémité radiale externe des brins 17, permettant de la sorte d'imprégner directement les brins 17 avec l'huile, par leur extrémité externe. La circulation d'huile le long des brins 17 est ainsi encore améliorée. De même que précédemment, l'huile h est évacuée du côté interne des brins 17 pour favoriser sa circulation et éviter son agglomération sur les brins 17.

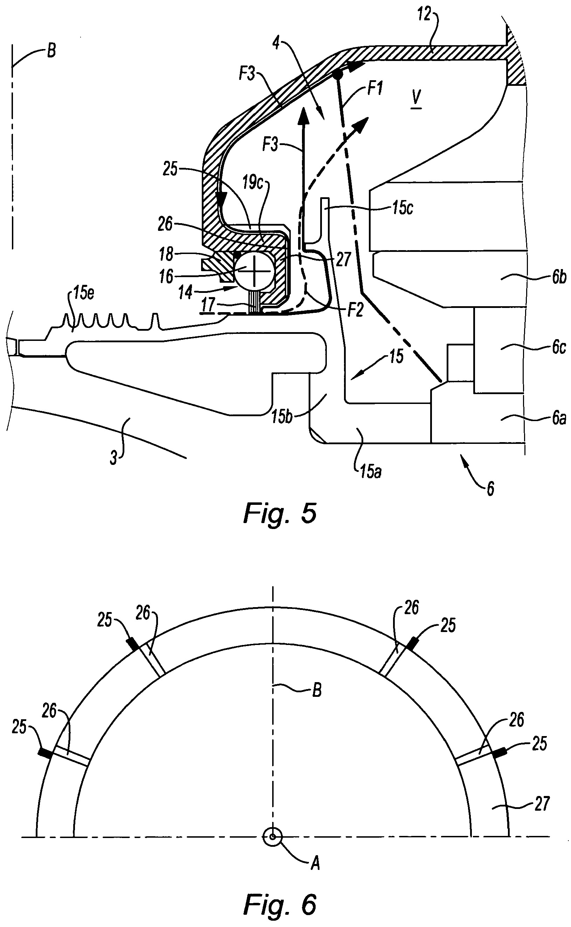

Dans la forme de réalisation de la figure 5, le dispositif d'étanchéité comporte des moyens de récupération d'huile dans la suspension d'huile de l'enceinte 4 comportant au moins une paire d'une nervure 25 d'arrêt ou rétention de l'huile et d'une rainure 26 de guidage de l'huile depuis la nervure 25 vers les brins 17 du joint 14 ; en l'espèce, il comporte quatre paires d'une nervure 25 et d'une rainure 26 qui sont réparties en position supérieure du turboréacteur, comme on le voit sur la figure 6. Plus précisément, chaque nervure 25 s'étend radialement vers l'extérieur à partir de la surface externe de la paroi interne 19c formée par un retour (vers l'aval) du carter 12 de la structure fixe ; elle s'étend longitudinalement sur toute la longueur de cette paroi interne 19c ; sa fonction est de former un barrage de rétention pour l'huile s'écoulant le long de la surface externe de cette paroi 19c ; une portion de l'huile est donc retenue juste en amont de chaque nervure 25 et le reste passe par-dessus cette dernière. Chaque rainure 26 est ménagée dans la surface aval de la paroi aval 27 de la gorge dans laquelle est logé le tore 16 ; la rainure 26 s'étend radialement le long de cette paroi aval 27 ; elle est par ailleurs ménagée juste au-dessus de la nervure 25, au niveau du barrage d'huile qui est donc guidée dans la rainure 26 depuis sa zone de rétention au-dessus de la nervure 25. L'huile est ainsi guidée vers la partie interne des brins 17 sur lesquels elle est répartie par effets conjugués de gravité et de capillarité ; l'huile est ici évacuée de la même manière que dans les formes de réalisation précédentes.

La forme de réalisation de la figure 5 est la forme de réalisation préférée de l'invention. En effet, elle est simple à fabriquer puisque de simples paires de nervures 25 et rainures 26 sont nécessaires. Son fonctionnement est par ailleurs très simple puisque l'huile est entraînée par gravité vers le bas du turboréacteur et est retenue dans ce mouvement par les nervures 25 et guidée depuis les nervures 25 vers le joint 14 par les rainures 26.

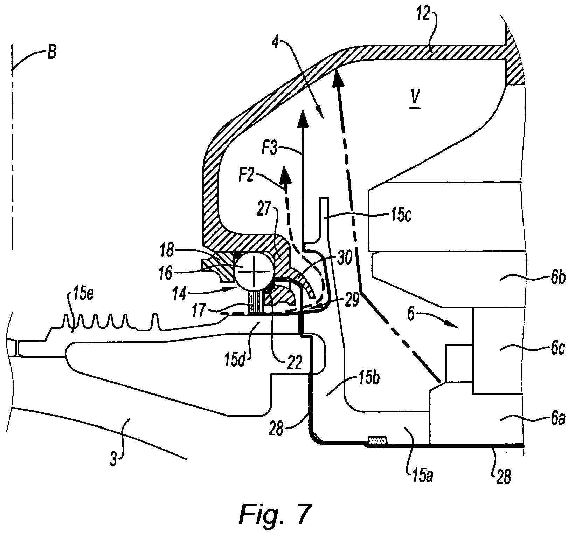

Dans la forme de réalisation de la figure 7, le dispositif d'étanchéité comporte des moyens d'alimentation d'huile en provenance d'une source spécifiquement dédiée à l'alimentation en huile du joint à brosse 14. Plus précisément, le dispositif comporte des canaux 28 de guidage d'huile en provenance de l'arbre basse pression 3 (alimentés par la même source d'huile que l'huile alimentant le palier 6) ; ce sont ces canaux 28 qui forment la source d'huile spécifique dédiée. L'huile est guidée jusqu'à des orifices 29 ménagés dans la deuxième portion longitudinale annulaire 15d de la pièce intermédiaire 15, à la base du lance-goutte 15c ; ces orifices 29 sont en l'espèce au nombre de deux mais un nombre différent peut être prévu. L'huile est projetée par effet centrifuge contre une écope 30 formée par une paroi arrondie en saillie hors de la paroi aval 27 de la gorge dans laquelle est logé le tore 16. Des canaux 31 sont ménagés dans la paroi aval 27 de la gorge, sous l'écope 30, et communiquent avec une chambre annulaire 22 ménagée entre la partie interne de la paroi aval 19a formant le réservoir 19 et la partie interne du tore 16 du joint à brosse 14 ; l'écope 30 est donc finalement agencée pour guider l'huile projetée sur elle vers la chambre annulaire 22 qui est ainsi "noyée" d'huile c'est-à-dire que son volume est complètement rempli d'huile. De même que dans la forme de réalisation de la figure 2, une pluralité de petits canaux 23, de transport d'huile depuis la chambre annulaire 22 vers les brins 17, sont percés et permettent la diffusion de l'huile le long des brins 17. L'huile est évacuée en l'espèce de la même manière que dans les formes de réalisation précédentes.

L'invention a été décrite en relation avec des formes de réalisations préférées, mais il va de soi que d'autres formes de réalisations sont envisageables. En particulier, les caractéristiques des différentes formes de réalisations décrites peuvent être combinées entre elles, s'il n'y a pas d'incompatibilités.

## Revendications

1. Dispositif d'étanchéité convenant à la mise en oeuvre d'une enceinte (4, 5) formée par au moins un organe tournant (3, 15) et au moins un organe statique (12, 13) d'un turboréacteur (1) et destinée à contenir une suspension de gouttelettes d'huile de lubrification (h), le dispositif d'étanchéité comportant au moins un joint à brosse (14), avec des brins (17) juxtaposés, orientés radialement en direction de l'organe tournant (3, 15) et fixés à une de leurs extrémités à un organe fixe (16) solidaire dudit organe statique (12), ledit joint étant agencé pour assurer l'étanchéité entre ledit organe tournant (15) et ledit organe statique (12), ledit dispositif étant **caractérisé par le fait qu'**il comporte des moyens de récupération (12, 19, 25, 30) d'une partie de l'huile circulant le long d'une des parois (19b, 30) de ladite enceinte (4, 5) et des moyens d'acheminement (20, 22, 23, 24, 26) de ladite huile récupérée (h) vers l'extrémité fixe des brins (17) dudit joint à brosse (14).

2. Dispositif selon la revendication 1 dans lequel les moyens d'acheminement comportent au moins un canal (20, 22, 24, 26) de guidage par gravité de l'huile (h) depuis les moyens de récupération (12, 19, 25) jusqu'au joint à brosse (14).

3. Dispositif selon la revendication 2 dans lequel, le joint (14) comportant un tore (16) au moins partiellement creux auquel sont fixés les brins (17), les moyens d'acheminement comportent au moins un canal (24) de guidage de l'huile (h) depuis les moyens de récupération (19) vers l'intérieur du tore (16) pour imprégner les brins (17) dans leur zone de fixation au tore (16).

4. Dispositif selon l'une des revendications 2 ou 3 dans lequel les moyens de récupération d'huile comportent, en position supérieure du turboréacteur (1), un réservoir (19) de récupération par gravité de l'huile (h) circulant le long d'une des parois.

5. Dispositif selon l'une des revendications 2 à 4 dans lequel les moyens de récupération d'huile comportent au moins une nervure (25) de rétention d'huile (h), associée à une rainure (26) de guidage de l'huile (h) depuis la nervure (25) vers le joint à brosse (14).

6. Turboréacteur avec un dispositif d'étanchéité comportant les caractéristiques du dispositif d'étanchéité de l'une des revendications 1 à 5.

## Patentansprüche

1. Abdichtungsvorrichtung, die geeignet ist, einen Behälter (4, 5) umzusetzen, der durch mindestens ein drehbares Teil (3, 15) und mindestens ein statisches Teil (12, 13) eines Strahltriebwerks (1) gebildet wird und dazu bestimmt ist, eine Suspension aus Schmieröltröpfchen (h) zu enthalten, wobei die Abdichtungsvorrichtung mindestens eine Bürstendichtung (14) mit nebeneinander angeordneten und radial in Richtung des drehbaren Teils (3, 15) ausgerichteten Borsten (17) beinhaltet, die an einem Ende an einem festen, mit besagtem statischen Teil (12) solidarischen Organ (16) befestigt sind, und wobei besagte Dichtung so angeordnet ist, dass sie die Abdichtung zwischen besagtem drehbaren Teil (15) und besagtem statischen Teil (12) gewährleistet, wobei besagte Vorrichtung **dadurch gekennzeichnet ist, dass** sie Rückgewinnungsmittel (12, 19, 25, 30) eines Teils des, längs einer der Wände (19b, 30) des besagten Behälters (4, 5) zirkulierenden Öls sowie Transportmittel (20, 22, 23, 24, 26) umfasst, um das zurückgewonnene Öl (h) zum festen Ende der Borsten (17) der besagten Bürstendichtung (14) zu befördern.

2. Vorrichtung gemäß Anspruch 1, in der die Transportmittel mindestens einen Kanal (20, 22, 24, 26) enthalten, in dem das Öl (h) von den Rückgewinnungsmitteln (12, 19, 25) durch Schwerkraft zur Bürstendichtung (14) befördert wird.

3. Vorrichtung gemäß Anspruch 2, in der die Dichtung (14) einen mindestens teilweise hohlen Kern (16) enthält, auf dem die Borsten (17) befestigt sind, wobei die Transportmittel mindestens einen Führungskanal (24) zur Beförderung des Öls (h) von den Rückgewinnungsmitteln (19) ins Innere des Kerns (16) enthalten, um die Borsten (17) in ihrem Befestigungsbereich an den Kern zu tränken (16).

4. Vorrichtung gemäß einem der Ansprüche 2 oder 3, in der die Öl-Rückgewinnungsmittel in der oberen Position des Strahltriebwerks (1) einen Tank (19) zur Rückgewinnung des, entlang einer der Wände verlaufenden Öls (h) durch Schwerkraft enthält.

5. Vorrichtung gemäß einem der Ansprüche 2 bis 4, in der die Öl-Rückgewinnungsmittel mindestens eine Auffangrippe (25) für das Öl (h) aufweisen, die mit einer Ölführungsnut (h) (26) von der Rippe (25) bis hin zur Bürstendichtung (14) assoziiert ist.

6. Strahltriebwerk mit einer Abdichtungsvorrichtung, welche die Eigenschaften der Abdichtungsvorrichtung gemäß einem der Ansprüche 1 bis 5 umfasst.

## Claims

1. A sealing device adapted to implement an enclosure (4, 5) that is formed by at least one rotary member (3, 15) and at least one static member (12, 13) of a turbojet (1) and that is intended to contain a suspension of lubricating oil droplets (h), the sealing device comprising at least one brush seal (14), with juxtaposed strands (17), radially oriented towards the rotary member (3, 15) and attached at one of their ends to a fixed member (16) secured to said static member (12), said seal being arranged to create a seal between said rotary member (15) and said one static member (12), said device being **characterized in that** it comprises means (12, 19, 25, 30) for recovering some of the oil flowing along one wall (19b, 30) of said enclosure (4, 5) and means (20, 22, 23, 24, 26) for channeling said recovered oil (h) towards the fixed end of the strands (17) of said brush seal (14).

2. The device as claimed in claim 1 in which the channeling means include at least one gravitational channel (20, 22, 24, 26) for guiding the oil (h) from the recovering means (12, 19, 25) to the brush seal (14).

3. The device as claimed in claim 2 in which the seal (14) includes an at least partially hollow torus (16) to which the strands (17) are attached, and the channeling means include at least one channel (24) for guiding the oil (h) from the recovering means (19) to the interior of the torus (16) to impregnate the strands (17) where they are attached to the torus (16).

4. The device as claimed in one of claims 2 or 3 in which the oil recovering means include, at the top of the turbojet (1), a tank (19) for the gravitational recovery of oil (h) flowing along one of the walls.

5. The device as claimed in one of claims 2 to 4 in which the oil recovering means include at least one rib (25) for retaining oil (h) combined with a slot (26) for guiding the oil (h) from the rib (25) to the brush seal (14).

6. A turbojet with a sealing device having the features of the sealing device of one of claims 1 to 5.
